# EUROPEAN PATENT SPECIFICATION

(11) **EP 1 342 679 B1**
(45) Date of publication and mention of the grant of the patent: **15.09.2004**
(21) Application number: 03075403.0
(22) Date of filing: 11.02.2003
(51) Int. Cl.: B65G 51/01, A23N 3/00

(54) **Singulator**
Vereinzelungsförderanlage
Séparateur

(30) Priority: 11.02.2002 EP 02075510
(43) Date of publication of application: 10.09.2003
(73) Proprietor: FPS Food Processing Systems B.V., 2631 RE Nootdorp (NL)
(72) Inventor: van Wijngaarden, Erik, 7558 WL Hengelo (NL); Delfos, Tom, 2622 DD Delft (NL)
(74) Representative: Prins, Adrianus Willem, Mr. Ir.

(56) References cited:
- GB-A- 1 198 932
- US-A- 1 744 363
- US-A- 4 542 687

## Description

The invention relates to an apparatus and a method for singulating products supplied in a stream, as indicated in the preamble of claim 1 and claim 10, respectively.

Such a method and apparatus are known from WO 00/05159. This publication discloses an arrangement which comprises, between the supply stream in the channel and the roller conveyor which, adjacent the liquid surface, takes over the fruits from the liquid, for each singulating row two juxtaposed parallel running conveyors having at each outer side slightly upstanding edges, the conveyors starting approximately horizontally under the water surface and converging upwards in a V-shape to a particular singulation width.

In this singulator, the singulating operation takes place for a considerable part above the water surface. This will certainly also result in products damming up between the converging belts and hence cause damage to a certain number of products.

A more important shortcoming of this apparatus is considered to be the insufficient degree of filling due to the travel of the two conveyors and the products being carried along whilst floating. Precisely at the time of being carried along, the products will start dancing and rotating in the water and thus pass up the opportunity to take up a position on the roller conveyor emerging from the water.

To improve the singulation mentioned, the invention provides an apparatus, characterized in that the apparatus comprises
- a submerging device for submerging the products supplied in the channel;
- a singulating channel, of a width equal to the singulating width, intended for collecting products, released after submersion, in a continuous row, and
- a releasing device for releasing the products after submersion and for then feeding the products to the singulating channel.

The method according to the present invention is characterized in that singulation comprises the successive steps of:
- submerging the products in the liquid;
- releasing the submerged products gradually one after the other, with the products in the liquid stream being grouped, floating, in a continuous row, and
- taking over of the row of products by the transport device.

With this apparatus and method, with great advantage, a row of buffered products is formed which will be carried along in a very gradual manner from the liquid stream, whereby a high degree of filling is obtained for the following transport device.

Further embodiments and details of the present invention will be elucidated in more detail with reference to the drawing. In the drawing:
Fig. 1 schematically shows a perspective view of an embodiment according to the invention;
Fig. 2 schematically shows a side view of a cross section along the transport direction of the embodiment according to Fig. 1;
Fig. 3 shows a top plan view of a part of the embodiment according to Fig. 1; and
Figs. 4A, 4B and 4C show cross sectional views of Fig. 3 along the planes I, II and III, respectively.

In the different Figures, the same parts have the same reference numerals.

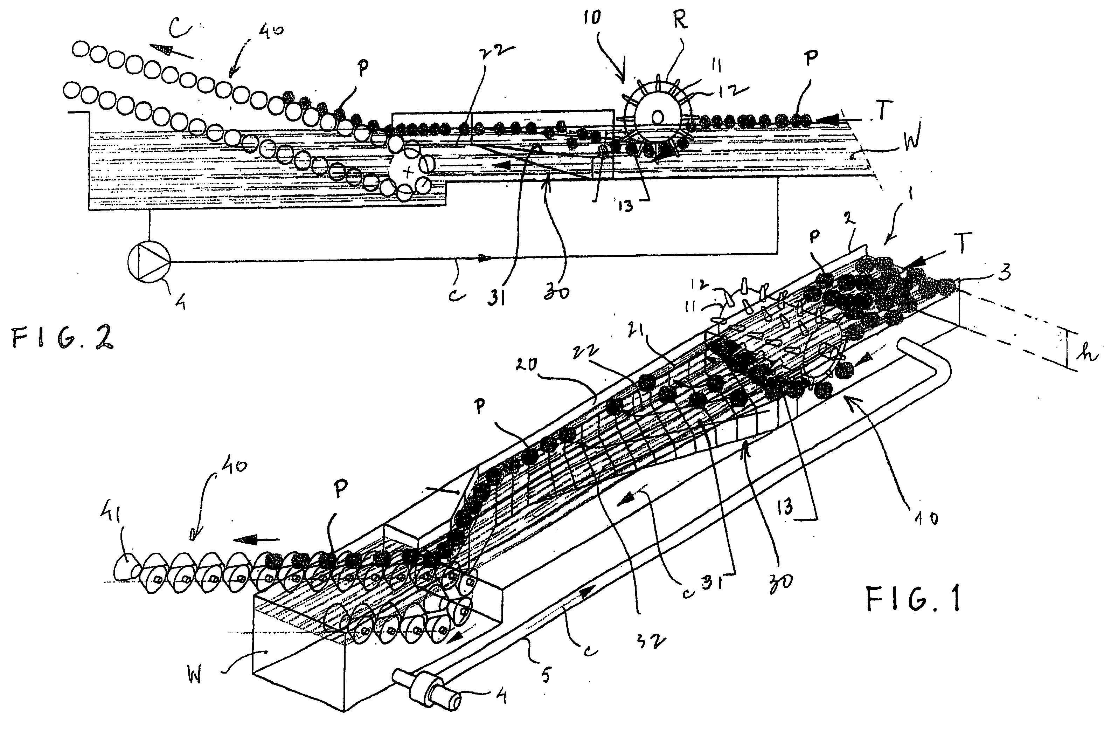

Referring to Figs. 1 and 2, there is shown a first embodiment of the apparatus according to the present invention, wherein products P, such as apples, are floatingly supplied in a liquid stream W in transport direction T in a channel 1 to, successively, a submerging device 10, a releasing device 30, and a singulating channel, thereby to be singulated and then to be carried along by a transport device 40. More in particular, the channel 1 has a tray-shaped cross section, with two side walls, one side wall 2 and the other side wall 3, in which liquid, such as water W, having a depth h, is circulated with a circulating pump 4 and via a circulation duct 5 into the channel in the transport direction T, also the downstream direction, or also direction of circulation c.

First of all, the products P reach the submerging device 10 which is formed by a pinned roller 11 with pins 12 and a comb 13. This pinned roller 11 extends transversely to the transport direction T, between the two side walls. On the roller, pins 12 are disposed, extending radially from the surface of the roller. The intermediate distances between the pins is smaller than the smallest diameter of a product P, so that, when the roller rotates, the products are carried along in the rotation direction R, which is such that the rotation direction below the water surface proceeds in the direction of the transport direction T, being the same as the downstream direction. To realize this, the roller must rotate in the water at least partly. The depth over which this takes places determines the submersion depth. Immediately following the pinned roller 11, a comb 13 with teeth and intermediate recesses 14 is fixedly mounted. The teeth of the comb are so disposed that, during rotation, only the pins 11 can move through the recesses 14. The comb 13 is arranged so as to slope across the width of the channel, from one side adjacent the one side wall 2 to the other side adjacent the other side wall 3, with each tooth located in a substantially horizontal plane. What is thus enabled is that not all products are submerged to an equal extent. More in particular, products adjacent the one side wall are less deeply submerged than the products adjacent the other side wall. It will be clear that the materials for the roller, pins and comb are selected such that the products are not damaged in any way. The pins, for instance, are made of a suitable plastic or rubber.

Directly following this comb, in the channel, a singulating channel 20 has been constructed, having a width equal to the singulating width, while the one side wall 2 at the same time constitutes the one side wall of the singulating channel 20, and a wall element 21 forms the other wall of this singulating channel. This wall element 21 has a lower edge 22 at a depth adjacent at least the center of the products. From this lower edge 22, the comb 13 starts, while the further sloping of the comb to the other side of the channel preferably proceeds as far as the underside of the roller.

In order to cause the products, upon being simultaneously carried along by the liquid stream and the pinned roller, to form, after the comb 13, gradually and one after the other, a continuous row in the singulating channel, the releasing device 30 comprises a baffle 31. This baffle is located upstream, across the entire width, close to the comb, and extends further between, at the one side, the lower edge 22 or the wall element 21 and, at the other side, a side edge 32. This side edge 32 proceeds, downstream, towards the wall element 21. From this side edge 32, a vertical plate part 33 extends substantially as far as the bottom of the channel 1. The angle of convergence, calculated from the other side wall 3, is preferably between 35° and 55°. The configuration of the side edge 32 may further be selected such that the baffle forms a flat plate part. It is also possible that, conversely, this lower edge 32 continues to run horizontally so that the baffle forms a curved plate part, with which the flow-through direction of the liquid, and hence the direction of conveyance of the products, is deflected in the direction of the singulating channel 20.

Connected downstream to the singulating channel is a transport device 40 carrying the products upwards one by one out of the row. Conventionally, the transport device is a so-called roller conveyor 41, with successive axes having diabolos thereon, with each pair of successive diabolos in the transport direction forming a nest for a single product P. The axes are, for instance, on both sides attached to two endless chains and thus form an endless transport device. In many cases, this transport device itself forms part of a sorting machine as is generally known in this field of the art.

It has been found that with the above-described successive devices in the singulation channel a continuous row of products is formed, to be regarded as a buffer. The products in this row lie against each other such, and the row has a length such, that a roller conveyor as described hereinabove carries along the products without unfilled nests and this manner of carrying products along hence results in a degree of filling of approximately 100%.

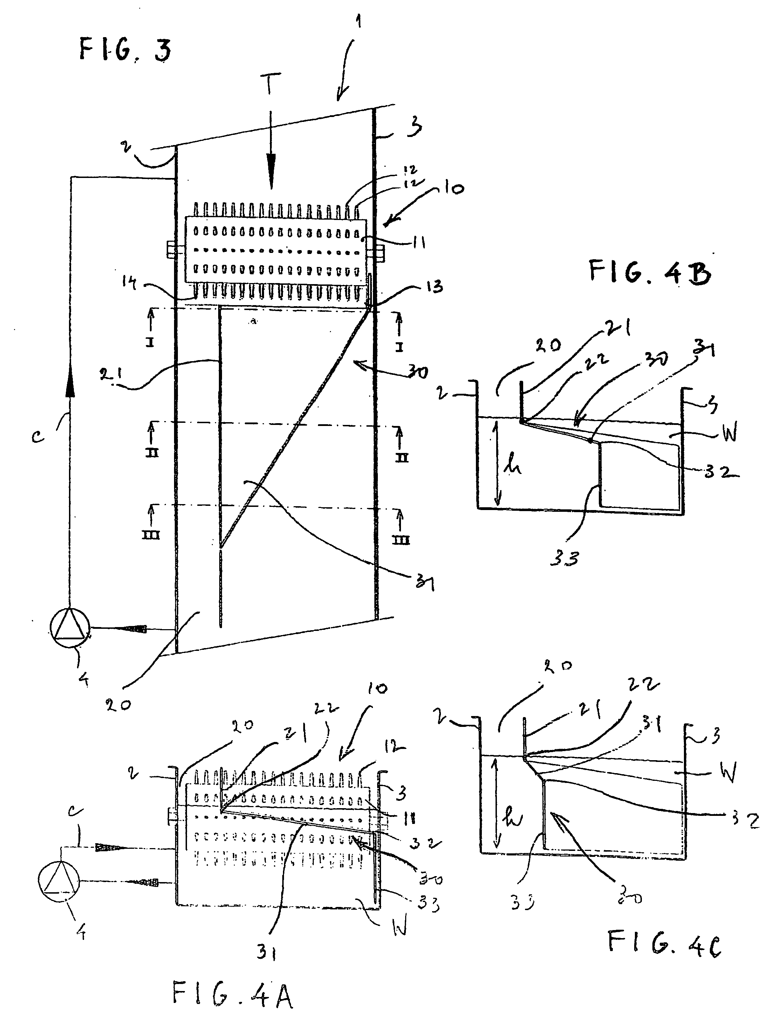

Figs. 3 and 4A-4C show elevational views of the same devices, or parts thereof, as described hereinabove. What is clear to see, in particular from Figs. 4A-4C, is the configuration of the wall element 21, the lower edge 22 and the side edge 32, the baffle 31 and the plate part 33. Also, Fig. 3 gives an impression of the configuration of the singulation channel 20 which preferably continues beyond the end of the side edge 32 in order to create a sufficiently long buffer.

In a second exemplary embodiment, an entirely different type of submerging device 40 has been chosen. To provide that, along a particular part of the length of the channel 1, the products are submerged in the liquid sufficiently deeply, along that part of the length gas is supplied from the bottom, for instance from nozzles, of from a vaporizer. The change in density arising along that part of the length, more in particular the upwardly decreasing density, results in the products coming down and floating at a particular depth. Whilst being simultaneously carried along, the products are caught downstream, in the same manner as described above, under a baffle 31. The further successive devices can be utilized in the same manner to obtain a buffer of products in a singulating channel.

It will be clear to any skilled person that through small modifications of or additions to the devices described, side effects can be avoided, or, conversely, be obtained, without thereby departing from the scope of the claims. For instance, the baffle can be formed from cloth, while the angle of convergence can be adjusted. Moreover, the plate-shaped parts will be such that the products, while being carried along, are not damaged and not hindered. For instance, a few openings in the plate parts can promote the flow-through, while gauze-shaped surfaces will rather cause the products to grate. Also, the plate parts mentioned can have in whole or in part a straight and/or curved configuration to suitably influence the flow of the liquid and the handling of the products.

## Claims

1. An apparatus for singulating products (P), such as apples, which, floating along in water in a channel (1) in the transport direction, are supplied and, after singulation in the water, are then fed out of the water to a transport device, for instance a roller conveyor,
**characterized in that**
the apparatus comprises
- a submerging device (10) for submerging products supplied in the channel,
- a singulating channel (20), of a width equal to the singulating width, intended for collecting the products released after submersion, in a continuous row, and
- a releasing device (30) for releasing the products after submersion and for then feeding the products to the singulating channel.

2. An apparatus according to claim 1, **characterized in that** the singulating channel (20) is located on one side of the channel, (1) while the side wall (2) of said one side also forms the side wall of the singulating channel, while the other side of the singulating channel is a wall element (21), with a lower edge (22) at a depth adjacent at least the center of the products.

3. An apparatus according to claim 1 or 2, **characterized in that** the submerging device (10) consists of a gas supply element disposed adjacent the bottom of the channel.

4. An apparatus according to claim 3, **characterized in that** the gas supply element comprises spray nozzles.

5. An apparatus according to claim 1, **characterized in that** the releasing device (30), in transverse direction perpendicular to said transport direction, from said one side to said other side of the channel, releases the submerged products one after another, while the depth to which the products have been submerged increases gradually in said transverse direction towards the other side of the channel.

6. An apparatus according to claim 1 or 2, **characterized in that** the submerging device comprises
- a pinned roller (11) transverse to and having the width of the channel, which rotates, at least for a part of the lower half, in the water, the pins (12) extending radially from the roller and, in the direction parallel to the water surface, having an intermediate distance smaller than the smallest diameter of a product, while, for the purpose of carrying along the products, the direction of rotation the water extends in the direction of floating travel, and
- a comb (13) with teeth, following the pinned roller, sloping across the width of the channel, away from the one side from just below the water surface to the other side, as far as the underside of the roller, having, between the teeth, recesses for the pins, with each tooth located in a virtually horizontal plane.

7. An apparatus according to claims 1 and 6, **characterized in that** the releasing device comprises a baffle (31), having one side connected with said lower edge of the singulating channel (20), with the upstream transverse side connected to and having the width of the comb, and with, at the other side, a side edge which virtually immediately after the comb converges from the other side wall downstream to the wall element, while a plate part is connected to this side edge, which plate part extends downwards substantially as far as the bottom of the channel.

8. An apparatus according to claim 7, **characterized in that** the comb (13) and the baffle (31) constitute a flat plane.

9. An apparatus according to claim 7, **characterized in that** the comb (13) and the baffle (31) constitute a curved plane, with said side edge extending horizontally in downstream direction.

10. A method for singulating floating products, such as apples, supplied with a liquid stream, and thereupon, with the liquid stream, fed to a transport device (40),
**characterized in that**
singulation comprises the successive steps of:
- submerging the products in the liquid,
- releasing the submerged products gradually one after another, with the products being grouped in the liquid stream, floating, in a continuous row, and
- taking over of the row of products by the transport device.

## Patentansprüche

1. Vorrichtung zur Vereinzelung von Produkten (P), wie Äpfel, welche im Wasser in einem Kanal (1) entlang der Transportrichtung fließend zugeführt werden, nach einer Vereinzelung in dem Wasser, aus dem Wasser zu einer Transportvorrichtung, beispielsweise einen Rollenförderer, geführt werden,
**dadurch gekennzeichnet, daß**
die Vorrichtung aufweist:
- eine Eintauchvorrichtung (10) zum Eintauchen von in dem Kanal bereitgestellten Produkten,
- einen Vereinzelungskanal (20), mit einer zu der Vereinzelungsbreite gleichen Breite, zum Sammeln der nach einem Eintauchen freigegebenen Produkte in einer kontinuierlichen Reihe, und
- eine Freigabevorrichtung (30) zum Freigeben der Produkte nach einem Eintauchen und zum anschließenden Führen der Produkte zu dem Vereinzelungskanal.

2. Vorrichtung nach Anspruch 1, **dadurch gekennzeichnet, daß** sich der Vereinzelungskanal (20) an einer Seite des Kanals (1) befindet, während die Seitenwand (2) dieser Seite auch die Seitenwand des Vereinzelungskanals bildet und während die andere Seite des Vereinzelungskanals ein Wandelement (2) mit einer unteren Kante (22) bei einer zumindest am Mittelpunkt der Produkte angrenzenden Tiefe ist.

3. Vorrichtung nach Anspruch 1 oder 2, **dadurch gekennzeichnet, daß** die Eintauchvorrichtung (10) aus einem neben dem Boden des Kanals angeordneten Gasbereitstellungsanordnung besteht.

4. Vorrichtung nach Anspruch 3, **dadurch gekennzeichnet, daß** die Gasbereitstellungsanordnung Sprühdüsen umfaßt.

5. Vorrichtung nach Anspruch 1, **dadurch gekennzeichnet, daß** die Freigabevorrichtung (30) in senkrecht zur Transportrichtung querlaufenden Richtung, von der einen Seite zu der anderen Seite des Kanals, die eingetauchten Produkte nacheinander freigibt, während die Tiefe bis zu der die Produkte eingetaucht sind, fortschreitend in der querlaufenden Richtung zu der anderen Seite des Kanals ansteigt.

6. Vorrichtung nach Anspruch 1 oder 2, **dadurch gekennzeichnet, daß** die Eintauchvorrichtung aufweist:
- eine mit Zapfen ausgestattete Rolle (11), quer zum Kanal und die Breite dessen aufweisend, welche, zumindest für einen Teil der unteren Hälfte, in dem Wasser rotiert, wobei die Zapfen (17) sich radial von der Rolle und in der Richtung parallel zur Wasseroberfläche erstrecken, mit einem Zwischenabstand, welcher geringer als der kleinste Durchmesser eines Produkts ist, während zum Zwecke des Beförderns der Produkte sich die Drehrichtung in dem Wasser in Richtung der Fließbewegung erstreckt, und
- einen Kamm (13) mit Zähnen, der mit Zapfen ausgestatteten Rolle folgend und abschüssig über die Breite des Kanals verlaufend, ausgehend von der einen Seite gerade noch unterhalb der Wasseroberfläche zu der anderen Seite, der bis zur Unterseite der Rolle Aussparungen für die Zapfen zwischen den Zähnen aufweist, wobei jeder Zahn in einer nahezu horizontalen Ebene angeordnet ist.

7. Vorrichtung nach Anspruch 1 und 6, **dadurch gekennzeichnet, daß** die Freigabevorrichtung ein Leitblech (31) aufweist, welches mit einer Seite mit der unteren Kante des Vereinzelungskanals (20) verbunden ist, wobei die quer stehende stromaufwärts Seite mit dem Kamm verbunden ist und dessen Breite aufweist, und an der anderen Seite eine Seitenkante aufweist, welche nahezu unmittelbar nach dem Kamm von der anderen Seite stromabwärts zu dem Wandelement konvergiert, während ein Plattenteil mit dieser Seitenkante verbunden ist, wobei sich das Plattenteil im wesentlichen bis zum Boden des Kanals nach unten erstreckt.

8. Vorrichtung nach Anspruch 7, **dadurch gekennzeichnet, daß** der Kamm (13) und das Leitblech (31) eine ebene Fläche bilden.

9. Vorrichtung nach Anspruch 7, **dadurch gekennzeichnet, daß** der Kamm (13) und das Leitblech (31) eine gekrümmte Fläche bilden, wobei sich die Seitenkanten horizontal in stromabwärts Richtung erstrecken.

10. Verfahren zur Vereinzelung von fließenden Produkten, wie Äpfeln, welche mit einem Flüssigkeitsstrom bereitgestellt und alsdann mit dem Flüssigkeitsstrom zu einer Transportvorrichtung (40) geführt werden, **dadurch gekennzeichnet, daß**
die Vereinzelung die nachfolgenden Schritte aufweist:
- Eintauchen der Produkte in die Flüssigkeit,
- Freigeben der eingetauchten Produkte fortschreitend nacheinander, wobei die Produkte in dem Flüssigkeitsstrom gruppiert werden und in einer kontinuierlichen Reihe fließen, und
- Übernahme der Reihe von Produkten mittels einer Transportvorrichtung.

## Revendications

1. Appareil pour séparer un par un des produits (P) tels que des pommes, qui sont fournis en flottant sur l'eau dans un canal (1) dans la direction de transport, et, après séparation un par un dans l'eau, sont ensuite amenés hors de l'eau vers un dispositif de transport, par exemple un transporteur à rouleaux,
**caractérisé en ce que** l'appareil comprend :
- un dispositif d'immersion (10) pour immerger des produits fournis dans le canal,
- un canal (20) pour séparer un par un les produits, d'une largeur égale à la largeur de séparation, destiné à recueillir les produits libérés après immersion, selon une file continue, et
- un dispositif de libération (30) pour libérer les produits après immersion et pour ensuite amener les produits vers le canal de séparation.

2. Appareil selon la revendication 1,
**caractérisé en ce que** le canal (20) pour séparer un par un les produits est situé sur un côté du canal (1), tandis que la paroi latérale (2) dudit côté forme également la paroi latérale du canal de séparation, tandis que l'autre côté du canal de séparation est un élément de paroi (21), avec un bord inférieur (22) à une profondeur adjacente au moins au centre des produits.

3. Appareil selon la revendication 1 ou 2,
**caractérisé en ce que** le dispositif d'immersion (10) se compose d'un élément d'alimentation en gaz disposé de façon adjacente au fond du canal.

4. Appareil selon la revendication 3,
**caractérisé en ce que** l'élément d'alimentation en gaz comprend des buses de pulvérisation.

5. Appareil selon la revendication 1,
**caractérisé en ce que** le dispositif de libération (30), dans une direction transversale perpendiculaire à ladite direction de transport, à partir dudit côté vers ledit autre côté du canal, libère les produits immergés les uns après les autres, tandis que la profondeur à laquelle les produits ont été immergés augmente graduellement dans ladite direction transversale vers l'autre côté du canal.

6. Appareil selon la revendication 1 ou 2,
**caractérisé en ce que** le dispositif d'immersion comprend :
- un rouleau à picots (11) transversal au canal et ayant la largeur de celui-ci, qui tourne, au moins pour une partie de la moitié inférieure, dans l'eau, les picots (12) s'étendant radialement à partir du rouleau et, dans la direction parallèle à la surface de l'eau, ayant une distance intermédiaire inférieure au plus petit diamètre d'un produit, tandis que, dans le but de transporter les produits, le sens de rotation dans l'eau se trouve dans la direction de transport flottant, et
- un peigne (13) avec des dents, suivant le rouleau à picots, incliné à travers la largeur du canal, au loin du côté juste à partir du dessous de la surface de l'eau vers l'autre côté, autant que le dessous du rouleau, ayant, entre les dents, des évidements pour les picots, avec chaque dent située dans un plan virtuellement horizontal.

7. Appareil selon les revendications 1 et 6,
**caractérisé en ce que** le dispositif de libération comprend une chicane (31), ayant un côté relié audit bord inférieur du canal (20) pour séparer un par un les produits, avec le côté transversal amont relié au peigne et ayant la largeur de celui-ci, et avec, au niveau de l'autre côté, un bord latéral qui immédiatement virtuellement après le peigne converge à partir de l'autre paroi latérale en aval vers l'élément de paroi, tandis qu'une partie plate est reliée à ce bord latéral, laquelle partie plate s'étend vers le bas sensiblement autant que le fond du canal.

8. Appareil selon la revendication 7,
**caractérisé en ce que** le peigne (13) et la chicane (31) constituent un plan plat.

9. Appareil selon la revendication 7,
**caractérisé en ce que** le peigne (13) et la chicane (31) constituent un plan courbé, avec ledit bord latéral s'étendant horizontalement dans la direction aval.

10. Procédé pour séparer un par un des produits flottants, tels que des pommes, amenés par un courant liquide et sur ce, avec le courant liquide, amenés à un dispositif de transport (40),
**caractérisé en ce que** la séparation un par un des produits comprend les étapes successives de :
- immerger les produits dans le liquide,
- libérer les produits immergés graduellement les uns après les autres, avec les produits qui sont groupés dans le courant liquide, flottant, se-Ion une file continue, et
- reprendre la file de produits par le dispositif de transport.
